# EUROPÄISCHE PATENTSCHRIFT

(11) **EP 1 258 504 B1**
(45) Veröffentlichungstag und Bekanntmachung des Hinweises auf die Patenterteilung: **21.07.2004**
(21) Anmeldenummer: 02010718.1
(22) Anmeldetag: 14.05.2002
(51) Int. Cl.: C08J 5/18, C08L 101/12, C09K 9/02

(54) **Thermotrope Folie und Verfahren zu deren Herstellung**
THERMOTROPIC FOIL AND METHOD OF MANUFACTURING THE SAME
FILM THERMOTROPE ET METHODE POUR LA FABRICATION

(30) Priorität: 18.05.2001 DE 10124363
(43) Veröffentlichungstag der Anmeldung: 20.11.2002
(73) Patentinhaber: Fraunhofer-Gesellschaft zur Förderung der angewandten Forschung e.V., 80686 München (DE)
(72) Erfinder: Schwitalla, Christoph, 73614 Schorndorf (DE); Gödeke, Holger, 88480 Achstetten (DE); König, Norbert, 70771 L.-Echterdingen (DE)
(74) Vertreter: Pfenning, Meinig & Partner GbR

(56) Entgegenhaltungen:
- WO-A-99/64488
- DE-A- 4 433 090
- DE-A- 19 642 886
- DE-A- 19 719 224
- DE-A- 19 819 552
- DE-A- 19 943 169

## Beschreibung

Die Erfindung betrifft eine thermotrope Folie, die aus einem Gemisch aus einem photohärtendem Matrixpolymer, einer thermotropen monomeren Verbindung, einem Reaktivverdünner und einem Photoinitiator herstellbar ist. Ebenso betrifft die Erfindung ein Verfahren zur Herstellung von thermotropen Folien mittels einer Foliengießapparatur. Verwendung finden diese thermotropen Folien als Sichtschutz oder Schattierung auf transparenten Materialien, wie z.B. Glas oder Kunststoff.

Die Verwendung thermooptischer Polymerwerkstoffe findet gerade bei der Verglasung von Gebäuden oder auch von Fahrzeugen eine immer größere Bedeutung. So ist aus der DE 196 42 886 die Herstellung thermotroper Schichten auf Basis vollständig entmischter Polymere bekannt. Mit Hilfe von lacktechnischen Beschichtungsverfahren wie z.B. Rakeln, Spritzen oder Fluten, werden hierbei lösungsmittelhaltige Beschichtungen hergestellt. Da muß nach der Applikation der Beschichtungslösung auf das Substrat zunächst das Lösungsmitel, z.B. Xylol, abgedampft und anschließend die Vernetzung thermisch induziert werden.

Aus der DE 198 25 984 ist die Herstellung thermotroper UV-verletzender Gießharzsysteme für Verbundglasscheiben bekannt. Das Matrixsystem besteht aus UVhärtenden Oligomeren, Reaktivverdünnern sowie UV-Initiatoren. Die thermotropen Gießharze werden wie bei der Herstellung von Schallschutz-Gießharzscheiben in einen Scheibenzwischenraum gefüllt, der durch Lamination zweier Glasscheiben gebildet wird. Durch Einwirkung von UV-Strahlung erfolgt die Aushärtung binnen weniger Minuten. Mit diesem Herstellverfahren kann jedoch nur neue Verglasung erzeugt werden, ein Nachrüsten bestehender Verglasungsflächen ist somit nur durch den Austausch der kompletten Verglasung möglich, wodurch die Anwendung demnach nur für einen Neubau in Frage kommt. Allein in Deutschland verfügen die bestehenden Wohngebäude über eine Gesamtverglasungsflache von ca. 14.400.000 m². Ca. 40 % der bestehenden Gebäude verfügen bereits über Isolierverglasung, so daß ein Austausch der Verglasung aus wirtschaftlicher Sicht nicht sinnvoll ist. Gleichzeitig geht man davon aus, daß bei ca. 75 % dieser Verglasungsflächen Maßnahmen für den sommerlichen Wärmeschutz getroffen werden müssen. Für diesen Einsatzbereich wären nachrüstbare thermotrope Funktionsschichten ideal geeignet, um bestehende Gebäude hinsichtlich des sommerlichen Wärmeschutzes zu sanieren.

Aus der DE 199 43 169 A ist weiterhin eine thermotrope Folie bekannt, die zusätzlich eine Träger- bzw. Deckschicht aufweist.

Ausgehend von dieser sich aus dem Stand der Technik ergebenden Problemstellung ist die Aufgabe der - vorliegenden Erfindung, thermotrope Folien bereitzustellen, mit denen Verglasungsflächen nachgerüstet werden können, wodurch diese auch nachträglich noch thermotrop nachgerüstet werden können.

Diese Aufgabe wird durch die gattungsgemäße Folie mit den kennzeichnenden Merkmalen des Anspruches 1 sowie durch das gattungsgemäße Verfahren zur Herstellung mit den Merkmalen des Anspruches 9 gelöst. Die weiteren Unteransprüche zeigen vorteilhafte Weiterbildungen auf. Die Verwendung der thermotropen Folien wird in Anspruch 18 beschrieben.

Erfindungsgemäß werden die thermotropen Folien aus einem Gemisch aus einem photohärtenden Matrixpolymer, einer thermotropen monomeren Verbindung, einem Reaktivverdünner und einem Photoinitiator unter Zusatz einer thixotropen Verbindung in einer Konzentration zwischen 0,5 und 5 Gew.-% hergestellt.

Erfindungsgemäß ist weiterhin auf mindestens einer Oberfläche der Folie eine Adhäsionsschicht (engl. pressure sensitive adhesive acrylate, PSA) aufgetragen. Hierdurch können selbstklebende thermotrope Folien hergestellt werden, wie sie beispielsweise für Sanierungsarbeiten im Bauwesen benötigt werden. Die PSA-Schicht enthält Naturkautschuk, Styrol-Isopren-Styrol(SIS)-Blockcopolymere, ataktische Polypropylener, Ethyl-Vinyl-Copolymere, Acrylate, Silicone, Polyvinylallylether und/oder Styrol-Butadien (SBR). Die Schichtdicke der PSA-Schicht beträgt bevorzugt zwischen 1 und 12 µm, besonders bevorzugt zwischen 3 und 10 µm. In einer bevorzugten Variante enthält das Gemisch als thermotropes Monomer eine aliphatische Verbindung der allgemeinen Formel CₙH₂ₙ₊₂ mit n = 5 bis n = 30 in einer Konzentration zwischen 0,5 und 10 Gew.-%. Als photohärtende Matrixpolymere werden bevorzugt acrylmodifizierte Polyester, Urethane, Polyether und/oder Epoxide in einer Konzentration zwischen 10 und 80 Gew.-% eingesetzt. Als thixotrope Komponente werden Bentonit, Kaolin, Kieselsäure oder Gemische hiervon in einer Konzentration zwischen 0,5 und 5 Gew.-% verwendet. Ebenso wird dem Gemisch ein Reaktivverdünner zugesetzt, wobei Verbindung mit mindestens einer ungesättigten Gruppe, z.B. Acrylsäure, Acrylsäureester, Methacrylsäureester, Divinylbenzol in einer Konzentration zwischen 20 und 90 Gew.-% bevorzugt werden. Als Photoinitiatoren können Ketone und/oder Phosphinoxide in einer Konzentration zwischen 0,01 und 5 Gew.-% enthalten sein.

In einer vorteilhaften Weiterbildung wird auf einer Oberfläche der Folie eine Trägerfolie angeordnet. Diese kann aus PTFE oder vergleichbaren Werkstoffen bestehen.

Die thermotrope Folie besitzt bevorzugt eine Schichtdicke zwischen 10 µm und 1 mm, besonders bevorzugt zwischen 10 µm und 100 µm.

Erfindungsgemäß wird ebenso ein Verfahren zur Herstellung der thermotropen Folien mittels eine Foliengießapparatur bereitgestellt, die auf folgenden Verfahrensschritten beruht:
a) Zunächst wird ein Gemisch aus einem photohärtenden Polymer, einer thermotropen monomeren Verbindung, einem Reaktivverdünner, einem Photoinitiator und einer thixotropen Verbindung hergestellt.
b) Dieses Gemisch wird auf eine plane Trägerfläche in einer Schichtdicke zwischen 10 µm und 1 mm aufgetragen. Die Auftragung kann dabei z.B. mit Hilfe eines Schlittens, der über eine Rakel verfügt, mit einem exakt definierten Abstand zur planen Trägerfläche erfolgen, wodurch planparallele Filme herstellbar sind.
c) Die Vernetzung des Gemisches erfolgt durch Bestrahlung mit einer UV-Strahlungsquelle unter O₂-Ausschluß.
d) Aufbringen einer Adhäsionsschicht auf die Folie.

Vorteil dieses Herstellungsverfahrens ist es, daß die Lösungsmittelemission vermieden werden kann und somit die Arbeitsplatzbelastung im Produktionsverfahren sehr gering ist.

Bei einer bevorzugten Ausführungsform des Verfahrens erfolgt in einem weiteren Verfahrensschritt eine Beschichtung der Folie mittels eines Sputterverfahrens zur Modifizierung der spektralen Selektivität des Foliensystems. Die Schichtdicke solcher selbstklebenden thermotropen Foliensysteme (PSA) beträgt aber bevorzugt zwischen 1 und 12 µm, besonders bevorzugt zwischen 3 und 10 µm.

Bevorzugt wird in Schritt b) eine Trägerfläche aus einem Material mit geringen Adhäsionseigenschaften, z.B. PTFE, Silicon o.ä. verwendet. Ebenso ist es möglich, daß die Auftragung des Gemisches auf einer Trägerfolie erfolgt. Dadurch kann das Eigenschaftsprofil dieser Foliensysteme beliebig variiert werden. So kann z.B. die Kratzfestigkeit oder die Zugfestigkeit gesteigert werden.

Das Gemisch zur Herstellung der thermotropen Folien enthält bevorzugt als photohärtende Matrixpolymere acrylmodifizieerte Polyester, Urethane, Polyether, Epoxide und/oder Gemische von diesen in einer Konzentration zwischen 10 und 80 gew.-%. Als thermotrope monomere Verbindung werden bevorzugt aliphatische Verbindungen der allgemeinen Formel CₙH₂ₙ₊₂ mit n = 5 bis n = 30 oder Gemische hiervon in einer Konzentration zwischen 0,5 und 10 Gew.-% eingesetzt. Ebenso enthält das Gemisch einen Reaktivverdünner, der bevorzugt aus der Gruppe der Verbindung mit mindestens einer ungesättigten Gruppe ausgewählt ist, z.B. Acrylsäure, Acrylsäureester, Methacrylsäureester, Divinylbenzol. Diese Komponente wird dabei bevorzugt in einer Konzentration zwischen 20 und 90 Gew.-% eingesetzt. Als thixotrope Komponente wird Bentonit, Kaolin, Kieselsäure oder Gemische hiervon in einer Konzentration zwischen 0,5 und 5 Gew.-% eingesetzt. Der für die Herstellung des Gemisches eingesetzte Photoinitiator wird bevorzugt aus der Gruppe der Ketone und/oder Phosphinoxide in einer Konzentration zwischen 0,1 und 5 Gew.-% ausgewählt.

Voraussetzung für die Herstellung von Folien mit derartigen thermotropen Eigenschaften ist es, daß der Brechungsindex der Matrix dem der thermotropen Komponente unterhalb der Schalttemperatur entspricht. Ebenso muß das Gemisch einer entsprechenden Löslichkeit für die thermotrope Komponente vorweisen, um eine Fällungsreaktion während des Aushärtevorgangs zu ermöglichen.

Verwendung finden diese thermotropen Folien als Sichtschutz oder Schattierung auf transparenten Materialien. Hierzu zählen beispielsweise Verglasungen, aber auch Kunststoffe. Besonderer Vorteil dieser erfindungsgemäßen Verwendung ist es, daß eine nachträgliche Applikation auf bestehende Verglasung ermöglicht wird. Darüber hinaus ist die Herstellung thermotroper Folien im Vergleich zur Herstellung thermotroper Gießharzscheiben wirtschaftlich wesentlich vorteilhafter.

Anhand der Figur und der folgenden Beispiele soll der erfindungsgemäße Gegenstand näher erläutert und in seinen Eigenschaften beschrieben werden, ohne diesen dadurch einschränken zu wollen.

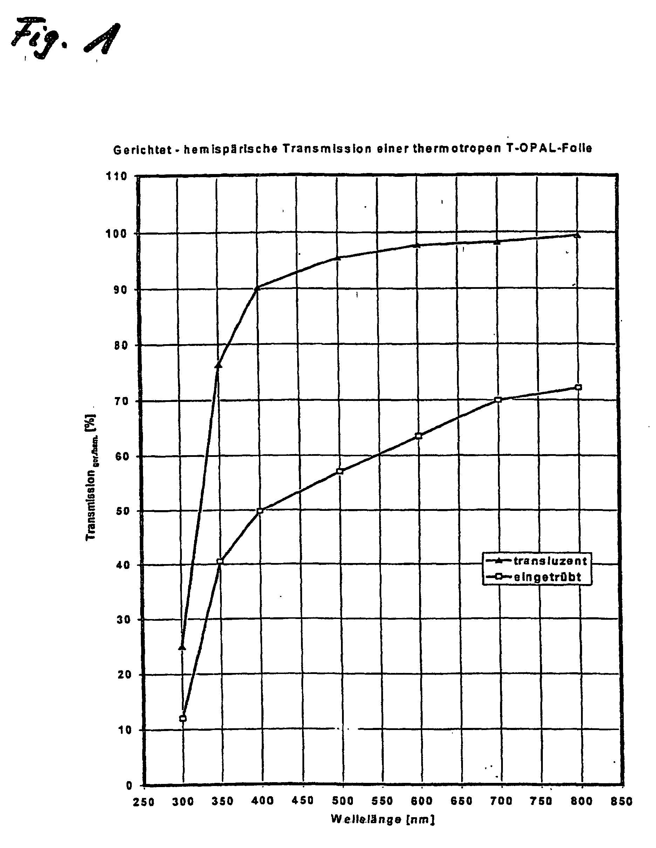

Figur 1 zeigt die Transmission einer derartigen thermotropen Folie in Abhängigkeit von der Wellenlänge für Temperaturen unterhalb sowie oberhalb der Schalltemperatur. Die Schichtdicke der hier untersuchten thermotropen Folie betrug etwa 1,5 mm. Es ist anhand der Figur deutlich zu erkennen, daß die Untersuchung der thermotropen Folie eine deutlich geringere Transmission im gesamten Wellenlängenbereich zwischen 300 und 800 nm ermöglicht.

### Beispiel 1

19,6 Teile eines acrylmodifizierten gesättigten Polyesters (Jägalux UV, Jäger), 14,7 Teile eines Epoxyacrylats (Actilane, Ackros), 14,7 Teile Acrylsäure (Fluka) und 49 Teile von Tetrahydrofurfurylacrylat (Sigma Aldrich) werden homogen vermischt. In diesem Gemisch werden 2 Teile n-Octadecan (Fluka) gelöst. Der so entstandenen Lösung werden 0,5 Teile UV-Initiator IRGACURE (Ciba Specialitätenchemie) zugesetzt. Der Rand zweier Glasscheiben wird mit einem

Abstandshalter bis auf eine Einfüllöffnung abgedichtet. In den entstandenen Hohlraum wird die oben beschriebene dünnflüssige Lösung eingefüllt. Abschließend wird diese transparente Vorrichtung mit UV-Strahlung (5 Leuchtstoffröhren Philips TLD 36W/08) bei einer Temperatur von ca. 20°C 15 Minuten lang belichtet. Nach der Vernetzung werden die Abdichtungen entfernt und die zwei Scheiben voneinander gelöst. Die thermotrope Folie, die sich bereits während der Vernetzung von den Trägerscheiben abtrennt, kann nun entnommen werden.

### Beispiel 2

19,6 Teile eines acrylmodifizierten gesättigten Polyesters (Jägalux UV), Jäger), 14,7 Teile eines Epoxyacrylats (Actilane, Ackros), 14,7 Teile Acrylsäure (Fluka) und 49 Teile von Tetrahydrofurfurylacrylat (Sigma Aldrich) werden homogen vermischt. Dieser Basisrezeptur werden 3 Teile Aerosil (Degussa) zugegeben und homogenisiert. In diesem Gemisch werden 2 Teile n-Octadecan (Fluka) gelöst. Der so entstandenen Lösung werden 2 Teile UV-Initiator IRGACURE (Ciba Specialitätenchemie) zugesetzt. Mit einer Foliengießapparatur werden auf ein Trägermaterial Naßfilme der Stärke 100 bis 500 µm aufgetragen. Abschließend wird der Film mit UV-Strahlung (5 Leuchtstoffröhren Philips TLD 36W/08) unter Inertatmosphäre bei einer Temperatur von ca. 20°C 15 Minuten lang belichtet.

## Patentansprüche

1. Thermotrope Folie, herstellbar aus einem Gemisch aus einem photohärtenden Matrixpolymer, einer thermotropen monomeren Verbindung, einem Reaktivverdünner und einem Photoinitiator,
**dadurch gekennzeichnet,**
**dass** das Gemisch als zusätzliche Komponente eine thixotrope Verbindung in einer Konzentration zwischen 0,5 und 5 Gew.-% ausgewählt aus Bentonit, Kaolin, Kieselsäure oder Gemische hiervon enthält und
**dass** auf mindestens einer Oberfläche der Folie eine Adhäsionsschicht (PSA) angeordnet ist, wobei
die PSA-Schicht einen Naturkautschuk, Styrol-Isopren-Styrol(SIS)-Blockcopolymer, ataktisches Polypropylen, Ethyl-Vinyl-Copolymer, Acrylat, Silicon, Polyvinylallylether und/oder Styrol-Butadien (SBR) enthält.

2. Folie nach Anspruch 1, **dadurch gekennzeichnet, dass** die Schichtdicke der PSA-Schicht zwischen 1 und 12 µm, bevorzugt zwischen 3 und 10 µm liegt.

3. Folie nach Anspruch 1 oder 2, **dadurch gekennzeichnet, dass** als thermotropes Monomer eine aliphatische Verbindung der allgemeinen Formel CₙH₂ₙ₊₂ mit n = 5 bis n = 30 in einer Konzentration zwischen 0,5 und 10 Gew.-% enthalten ist.

4. Folie nach mindestens einem der Ansprüche 1 bis 3, **dadurch gekennzeichnet, dass** als photohärtende Matrixpolymere acrylmodifizierte Polyester, Urethane, Polyether und/oder Epoxide in einer Konzentration zwischen 10 und 80 Gew.-% enthalten sind.

5. Folie nach mindestens einem der Ansprüche 1 bis 4, **dadurch gekennzeichnet, dass** der mindestens eine Reaktivverdünner eine Verbindung mit mindestens einer ungesättigten Gruppe, z.B. Acrylsäure, Acrylsäureester, Methacrylsäureester, Divinylbenzol in einer Konzentration zwischen 20 und 90 Gew.-% ist.

6. Folie nach mindestens einem der Ansprüche 1 bis 5, **dadurch gekennzeichnet, dass** als Photoinitiatoren Ketone und/oder Phosphinoxide in einer Konzentration zwischen 0,01 und 5 Gew.-% enthalten sind.

7. Folie nach mindestens einem der Ansprüche 1 bis 6,
**dadurch gekennzeichnet, dass** auf einer Oberfläche der Folie eine Trägerfolie angeordnet ist.

8. Folie nach mindestens einem der Ansprüche 1 bis 7, **dadurch gekennzeichnet, dass** die Folie eine Schichtdicke zwischen 10 µm und 1 mm, bevorzugt zwischen 10 µm und 100 µm besitzt.

9. Verfahren zur Herstellung von thermotropen Folien nach mindestens einem der Ansprüche 1 bis 8 mittels einer Foliengießapparatur mit folgenden Schritten:
a) Herstellung des Gemisches aus einem photohärtenden Polymer, einer thermotropen monomeren Verbindung, einem Reaktivverdünner, einem Photoinitiator und einer thixotropen Verbindung,
b) Auftragen des Gemisches auf eine plane Trägerfläche in einer Schichtdicke zwischen 10 µm und 1 mm,
c) Vernetzung des Gemisches durch Bestrahlung mit einer UV-Strahlungsquelle unter O₂-Ausschluß.
d) Aufbringen der Adhäsionsschicht (PSA) auf die Folie mit einer Schichtdicke zwischen 1 und 12 µm.

10. Verfahren nach Anspruch 9, **dadurch gekennzeichnet, dass** in einem weiteren Schritt eine Beschichtung der Folie mittels Sputterverfahren zur Modifizierung der spektralen Selektivität erfolgt.

11. Verfahren nach Anspruch 9 oder 10, **dadurch gekennzeichnet, dass** in Schritt b) eine Trägerfläche aus einem Material mit geringen Adhäsionseigenschaften, z.B. PTFE, Silicon, verwendet wird.

12. Verfahren nach mindestens einem der Ansprüche 9 bis 11, **dadurch gekennzeichnet, dass** in Schritt b) das Gemisch auf eine Trägerfolie aufgetragen wird.

13. Verfahren nach mindestens einem der Ansprüche 9 bis 12, **dadurch gekennzeichnet, dass** als photohärtende Matrixpolymere acrylmodifizierte Polyester, Urethane, Polyether, Epoxide in einer Konzentration zwischen 10 und 80 Gew.-% eingesetzt werden.

14. Verfahren nach mindestens einem der Ansprüche 9 bis 13, **dadurch gekennzeichnet, dass** als thermotrope Monomer-Verbindung eine aliphatische Verbindung der allgemeinen Formel CₙH₂ₙ₊₂ mit n = 5 bis n = 30 oder Gemische hiervon in einer Konzentration zwischen 0,5 und 10 Gew.-% eingesetzt werden.

15. Verfahren nach mindestens einem der Ansprüche 9 bis 14, **dadurch gekennzeichnet, dass** der mindestens eine Reaktivverdünner eine Verbindung mit mindestens einer ungesättigten Gruppe, z.B. Acrylsäure, Acrylsäureester, Methacrylsäureester, Divinylbenzol in einer Konzentration zwischen 20 und 90 Gew.-% ist.

16. Verfahren nach mindestens einem der Ansprüche 9 bis 15, **dadurch gekennzeichnet, dass** als thixotrope Komponente Bentonit, Kaolin, Kieselsäure oder Gemische hiervon in einer Konzentration zwischen 0,5 und 5 Gew.-% eingesetzt werden.

17. Verfahren nach mindestens einem der Ansprüche 9 bis 16, **dadurch gekennzeichnet, dass** als Photoinitiatoren Ketone und/oder Phosphinoxide in einer Konzentration zwischen 0,1 und 5 Gew.-% eingesetzt werden.

18. Verwendung der thermotropen Folie nach mindestens einem der Ansprüche 1 bis 17 als Sichtschutz oder Schattierung auf transparenten Materialien, z.B. aus Glas oder Kunststoff.

## Claims

1. Thermotropic foil, produced from a mixture of a photo-hardening matrix polymer, a thermotropic monomer compound, a reactive thinner and a photo initiator, **characterised in that** the mixture contains as an additional component a thixotropic compound at a concentration between 0.5 and 5 weight-% of bentonite, kaoline, silicic acid or mixtures thereof; and on at least one surface of the foil is arranged an adhesive layer (PSA); and the PSA-layer contains a natural caoutchouc, styrene-isoprene-styrene(SIS)-blockcopolymer, atactic polypropylene, ethyl-vinyl-copolymer, acrylate, silicon, polyvinylallylether and/or styrene-butadiene (SBR).

2. Foil according to Claim 1, **characterised in that** the layer thickness lies between 1 and 12 µm, preferably between 3 and 10 µm.

3. Foil according to Claim 1 or 2, **characterised in that** as thermotropic monomer an aliphatic compound of the general formula CₙH₂ₙ₊₂ where n = 5 to n = 30 is contained at a concentration between 0.5 and 10 weight-%.

4. Foil according to at least one of Claims 1 to 3, **characterised in that** acryl-modified polyesters, urethanes, polyether and/or epoxides are contained as photo-hardening matrix polymers at a concentration between 10 and 80 weight-%.

5. Foil according to at least one of Claims 1 to 4, **characterised in that** the at least one reactive thinner is a compound with at least one unsaturated group, for example acrylic acid, acrylic acid ester, methacrylic acid ester, divinyl benzene at a concentration between 20 and 90 weight-%.

6. Foil according to at least one of Claims 1 to 5, **characterised in that** ketones and/or phosphinoxides are contained as photo initiators at a concentration between 0.01 and 5 weight-%.

7. Foil according to at least one of Claims 1 to 6, **characterised in that** a support foil is arranged on one surface of the foil.

8. Foil according to at least one of Claims 1 to 7, **characterised in that** the foil has a layer thickness between 10 µm and 1 mm, preferably between 10 µm and 100 µm.

9. Method of producing thermotropic foils according to at least one of Claims 1 to 8 by means of a foil casting apparatus in the following steps:
a) Production of the mixture of a photo-hardening polymer, a thermotropic monomer compound, a reactive thinner, a photo initiator and a thixotropic compound;
b) Application of the mixture onto a plane support surface at a layer thickness between 10 µm and 1 mm;
c) cross-linking of the mixture by radiation with a UV radiation source under exclusion of O₂;
d) Application of the adhesion layer (PSA) onto the foil with a layer thickness between 1 and 12 µm.

10. Method according to Claim 9, **characterised in that** in a further step the foil is coated by means of a sputter process for the purpose of modification of spectral selectivity.

11. Method according to Claim 9 or 10, **characterised in that** in step b) a support surface of a material of low adhesive properties is used, for example PTFE, silicon.

12. Method according to at least one of Claims 9 to 11, **characterised in that** in step b) the mixture is applied to a support foil.

13. Method according to at least one of Claims 9 to 12, **characterised in that** between 10 and 80 weight-% acryl-modified polyester, urethane, polyether, epoxide are used as photo-hardening matrix polymers.

14. Method according to at least one of Claims 9 to 13, **characterised in that** an aliphatic compound of the general formula CₙH₂ₙ₊₂ where n = 5 to n = 30 or mixtures thereof are used at a concentration between 0.5 and 10 weight-% as thermotropic monomer compound.

15. Method according to at least one of Claims 9 to 14, **characterised in that** the at least one reactive thinner is a compound with at least one unsaturated group, for example acrylic acid, acrylic acid ester, methacrylic acid ester, divinyl benzene at a concentration between 20 and 90 weight-%.

16. Method according to at least one of Claims 9 to 15, **characterised in that** bentonite, kaoline, silicic acid or mixtures thereof at a concentration between 0.5 and 5 weight-% are used as thixotropic components.

17. Method according to at least one of Claims 9 to 16, **characterised in that** ketone and/or phosphinoxides at a concentration between 0.1 and 5 weight-% are used as photo initiators.

18. Use of the thermotropic foil according to at least one of Claims 1 to 17 for vision protection or shading on transparent materials, for example of glass or plastic. (N-90A)

## Revendications

1. Feuille thermotrope, pouvant être fabriquée à partir d'un mélange composé d'un polymère de matrice photodurcissant, d'un composé monomère thermotrope, d'un diluant réactif et d'un photoinitiateur,
**caractérisée en ce que** le mélange contient en tant que composante supplémentaire un composé thixotrope selon une concentration comprise entre 0,5 et 5 % en masse, sélectionné parmi la bentonite, le kaolin, l'acide silicique ou des mélanges de ceux-ci et
**en ce que** sur au moins une surface de la feuille est disposée une couche d'adhésion (PSA), où la couche PSA contenant un caoutchouc naturel, un copolymère séquencé de styrène-isoprène-styrène (SIS), un polypropylène atactique, un copolymère d'éthyle-vinyle, un acrylate, une silicone, un polyvinylallyléther et/ou du styrène-butadiène (SBR).

2. Feuille selon la revendication 1, **caractérisée en ce que** l'épaisseur de couche de la couche de PSA est comprise entre 1 et 12 µm, de préférence entre 3 et 10 µm.

3. Feuille selon la revendication 1 ou 2, **caractérisée en ce qu'**est présent en tant que monomère thermotrope un composé aliphatique de formule générale CₙH₂ₙ₊₂ avec n = 5 à n = 30, selon une concentration comprise entre 0,5 et 10 % en masse.

4. Feuille selon au moins l'une des revendications 1 à 3, **caractérisée en ce que** sont présents en tant que polymères de matrice photodurcissants des polyesters modifiés par un acryle, des uréthanes, des polyéthers et/ou des époxydes, selon une concentration comprise entre 10 et 80 % en masse.

5. Feuille selon au moins l'une des revendications 1 à 4, **caractérisée en ce que** le diluant réactif, au moins au nombre de un, est un composé comportant au moins un groupe insaturé, par exemple de l'acide acrylique, un ester d'acide acrylique, un ester d'acide méthacrylique, du divinylbenzène, selon une concentration comprise entre 20 et 90 % en masse.

6. Feuille selon au moins l'une des revendications 1 à 5, **caractérisée en ce que** sont présents en tant que photoinitiateurs des cétones et/ou des oxydes de phosphine, selon une concentration comprise entre 0,01 et 5 % en masse.

7. Feuille selon au moins l'une des revendications 1 à 6, **caractérisée en ce qu'**une feuille de support est disposée sur une surface de la feuille.

8. Feuille selon au moins l'une des revendications 1 à 7, **caractérisée en ce que** la feuille possède une épaisseur de couche comprise entre 10 µm et 1 mm, de préférence entre 10 µm et 100 µm.

9. Procédé de fabrication de feuilles thermotropes selon au moins l'une des revendications 1 à 8 au moyen d'un appareil de coulage de feuilles, comportant les étapes suivantes :
a) fabrication du mélange composé d'un polymère de matrice photodurcissant, d'un composé monomère thermotrope, d'un diluant réactif, d'un photoinitiateur et d'un composé thixotrope,
b) application du mélange sur une surface de support plane, selon une épaisseur de couche comprise entre 10 µm et 1 mm,
c) réticulation du mélange par irradiation avec une source de rayonnement UV sous exclusion d'O₂,
d) application de la couche d'adhésion (PSA) sur la feuille, selon une épaisseur de couche comprise entre 1 et 12 µm.

10. Procédé selon la revendication 9, **caractérisé en ce que**, lors d'une autre étape, on réalise un revêtement de la feuille au moyen d'un procédé de pulvérisation afin de modifier la sélectivité spectrale.

11. Procédé selon la revendication 9 ou 10, **caractérisé en ce que**, lors de l'étape b), on utilise une surface de support composée d'un matériau qui présente de faibles propriétés d'adhésion, par exemple du PTFE ou de la silicone.

12. Procédé selon au moins l'une des revendications 9 à 11, **caractérisé en ce que**, lors de l'étape b), le mélange est appliqué sur une feuille de support.

13. Procédé selon au moins l'une des revendications 9 à 12, **caractérisé en ce que** l'on utilise en tant que polymères de matrice photodurcissants des polyesters modifiés par un acryle, des uréthanes, des polyéthers, des époxydes, selon une concentration comprise entre 10 et 80 % en masse.

14. Procédé selon au moins l'une des revendications 9 à 13, **caractérisé en ce que** l'on utilise en tant que composé monomère thermotrope un composé aliphatique de formule générale CₙH₂ₙ₊₂ avec n = 5 à n = 30, ou des mélanges de ceux-ci, selon une concentration comprise entre 0,5 et 10 % en masse.

15. Procédé selon au moins l'une des revendications 9 à 14, **caractérisé en ce que** le diluant réactif, au moins au nombre de un, est un composé comportant au moins un groupe insaturé, par exemple de l'acide acrylique, un ester d'acide acrylique, un ester d'acide méthacrylique, du divinylbenzène, selon une concentration comprise entre 20 et 90 % en masse.

16. Procédé selon au moins l'une des revendications 9 à 15, **caractérisé en ce que** l'on utilise en tant que composé thixotrope de la bentonite, du kaolin, de l'acide silicique ou des mélanges de ceux-ci, selon une concentration comprise entre 0,5 et 5 % en masse.

17. Procédé selon au moins l'une des revendications 9 à 16, **caractérisé en ce que** l'on utilise en tant que photoinitiateurs des cétones et/ou des oxydes de phosphine, selon une concentration comprise entre 0,1 et 5 % en masse.

18. Utilisation de la feuille thermotrope selon au moins l'une des revendications 1 à 17 en tant que protection oculaire ou dispositif d'ombrage de matériaux transparents, par exemple en verre ou en matière synthétique.
